Europäisches Patentamt

European Patent Office

Office européen des brevets

(11) Veröffentlichungsnummer: **0 374 546**
**A2**

## EUROPÄISCHE PATENTANMELDUNG

(21) Anmeldenummer: 89122184.8

(22) Anmeldetag: 01.12.89

(51) Int. Cl.⁵· **G11B 5/72**

(30) Priorität: 17.12.88 DE 3842635

(43) Veröffentlichungstag der Anmeldung:
27.06.90 Patentblatt 90/26

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Hibst, Hartmut, Dr.**
**Sternstrasse 215**
**D-6700 Ludwigshafen(DE)**
Erfinder: **Werner, Arend, Dr.**
**Kurbrunnenstrasse 26**
**D-6702 Bad Duerkheim(DE)**
Erfinder: **Hack, Joachim**
**Pfarrer-Friedrich-Strasse 34**
**D-6700 Ludwigshafen(DE)**
Erfinder: **Mannsperger, Heinrich, Dr.**
**Goethestrasse 52**
**D-6915 Dossenheim(DE)**
Erfinder: **Hitzfeld, Michael, Dr.**
**Kalkerdestrasse 20**
**D-6718 Gruenstadt(DE)**
Erfinder: **Grau, Werner, Dr.**
**Tuchbleiche 5**
**D-6712 Bobenheim-Roxheim(DE)**
Erfinder: **Heil, Guenter, Dr.**
**Dirmsteiner Weg 41**
**D-6700 Ludwigshafen(DE)**
Erfinder: **Norbert, Holl**
**Waldstrasse 1**
**D-6719 Battenberg(DE)**

(54) Scheibenförmige magnetische Aufzeichnungsträger, Verfahren zu ihrer Herstellung und Informationsspeicher, enthaltend diese Aufzeichnungsträger.

(57) Die Erfindung betrifft scheibenförmige magnetische Aufzeichnungsträger, im wesentlichen bestehend aus einem flexiblen Trägermaterial, einer mindestens einseitig aufgebrachten ferromagnetischen Metalldünnschicht und einer auf dieser Metallschicht befindlichen, im wesentlichen aus Kohlenstoff bestehenden Schutz- und Gleitschicht, ein Verfahren zur Herstellung dieser Aufzeichnungsträger und Informationsspeicher diese Aufzeichnungsträger enthaltend.

## Scheibenförmige magnetische Aufzeichnungsträger, Verfahren zu ihrer Herstellung und Informationsspeicher, enthaltend diese Aufzeichnungsträger

Die Erfindung betrifft scheibenförmige magnetische Aufzeichnungsträger, im wesentlichen bestehend aus einem flexiblen Trägermaterial, einer mindestens einseitig aufgebrachten ferromagnetischen Metalldünnschicht und einer auf dieser Metallschicht befindlichen, im wesentlichen aus Kohlenstoff bestehenden Schutz- und Gleitschicht, ein verfahren zur Herstellung dieser Aufzeichnungsträger und Informationsspeicher, die diese Aufzeichnungsträger enthalten.

Scheibenförmige magnetische Aufzeichnungsträger, die auf einem flexiblen Trägermaterial eine Magnetschicht aus einem pulverförmigen magnetischen Material und einem organischen Bindemittel aufweisen, sind insbesondere als sogenannte Floppy-Disk bekannt und werden vielfach benutzt. Zur Erhöhung der Informationsdichte wurde schon mehrfach vorgeschlagen, die Pigment-Bindemittel-Magnetschicht durch eine solche aus ferromagnetischem Material in Form einer Metalldünnschicht zu ersetzen. Durch die mit einer Metalldünnschicht möglichen Anhebung der Koerzitivfeldstärke einerseits und der wegen der größeren Magnetisierung der verwendeten ferromagnetischen Metalle bzw. Legierungen möglichen Verringerung der Schichtdicke auf unter 1000 nm läßt sich eine deutlich höhere Speicherdichte des Aufzeichnungsmediums erreichen. Diese Metalldünnschichten werden bevorzugt durch PVD-Verfahren, wie Kathodenzerstäubung (Sputtern) oder Aufdampfen hergestellt. Diese dünnen Metallschichten müssen jedoch sowohl gegen Korrosion als auch gegen die mechanische Beanspruchung durch den Magnetkopf geschützt werden. Bei der Auswahl solcher Schutzschichten ist jedoch darauf zu achten, daß weder das Aufbringen der Schutzschicht noch die Schutzschicht selbst in irgendeiner Weise die Magnetschicht nachteilig beeinflußt.

Zur Lösung dieser Probleme wurde bereits eine Vielzahl von Vorschlägen gemacht. So beschreibt die US-PS 3 767 369 das Aufbringen einer Rhodium-Schutzschicht zur Verbesserung der Härte und der Gleiteigenschaften, wobei zur Verbesserung der zu geringen Haftung des Rhodiums auf der Magnetschicht eine (Zinn-Nickel)-Zwischenschicht aufgebracht werden muß. Dieses Verfahren erbringt weder die inzwischen geforderten Schutzschichteigenschaften, noch ist deren Aufbringen einfach und problemlos zu bewerkstelligen. Für alle jenen Fälle, bei denen die metallische Magnetschicht kobalthaltig ist, wurde vorgeschlagen, diese Magnetschicht bei vorgegebener Feuchtigkeit an Luft zu tempern und damit oberflächlich zu oxidieren (US-PS 3 353 166, US-PS 4 029 541). Ein solches Verfahren weist jedoch besondere Nachteile auf. So kann ein Temperprozeß, der zur Fertigung der genannten Schutzschichten nötig ist, sowohl die magnetischen Eigenschaften der Aufzeichnungsschicht selbst, als auch an sich übliche Unter- oder Zwischenschichten derart beeinflussen, daß sie ihrerseits wieder die Eigenschaften der Magnetschichten beeinträchtigen.

Auch das Aufbringen flüssiger Oligomerer, z.B. von Perfluorpolyethern, auf die zu schützende Magnetschicht durch Tauchen oder Aufschleudern ist beispielsweise aus der US-PS 3 778 308 bekannt. Nachteilig an diesem Verfahren ist jedoch, daß das Schmiermittel, z.B. unter dem Einfluß der Zentrifugalkraft und der Luftströmung beim Betrieb der Aufzeichnungsträger zunehmend von innen nach außen wandert, so daß unter Abnahme der Schmierfähigkeit der Verschleiß und die Reibung sich gegenseitig beeinflussend lawinenartig anwachsen.

Nach anderen Verfahren werden unterschiedliche Schutzschichten im Vakuum, meist durch Sputfern, aufgebracht, so gemäß der US-PS 4 277 540 Schichten aus Gold, Tantal, Niob, Platin, Chrom, Wolfram und Rhodium sowie die Nitride oder Carbide des Siliciums, Zirkons, Hafniums und Titans und gemäß der US-PS 4 268 369 Schichten aus Siliciumdioxid. Des weiteren werden in der DD-PS 109 101 für Magnetspeicher mit metallischer Dünnschicht Schutzschichten aus im Vakuum aufgewachsenen Kohlenstoffschichten beschrieben. Spezielle Ausgestaltungen solcher Kohlenstoffschutzschichten sind in den IEEE Trans. Mag., Vol. MAG-22, No. 5, September 1986, Seite 999-1001 und auch u.a. in WO 88/05953 oder EP-A 273330 beschrieben. Mit diesen modifizierten Schutzschichten auf der Basis von Kohlenstoff lassen sich die Abriebeigenschaften von Metalldünnschichtaufzeichnungsträgern derart verbessern, daß sie bei einer Geschwindigkeit von 300 Upm eine Betriebslaufzeit von bis zu 11 Stunden, d.h. von bis zu 0,2 Millionen Umläufen erreichen. Die Lebensdauer für scheibenförmige Aufzeichnungsträger gemäß den Spezifikationen erfordert jedoch eine Betriebslaufzeit von mindestens 560 Stunden oder 10 Millionen Umläufen, wobei der Magnetkopf ununterbrochen mit der Aufzeichnungsspur in Kontakt ist.

Aufgabe der Erfindung war es, scheibenförmige magnetische Aufzeichnungsträger bereitzustellen, welche auf einem flexiblen Trägermaterial mindestens einseitig eine ferromagnetische Metalldünnschicht sowie auf dieser Metallschicht eine vorwiegend aus Kohlenstoff bestehende reibungsmindernde Schicht aufweisen und welche sich insbesondere durch eine hohe Betriebslebensdauer auszeichnen. Außerdem war es Aufgabe der Erfindung, ein Verfahren zur Herstellung derartiger Aufzeichnungsträger anzugeben.

Es wurde nun gefunden, daß scheibenförmige magnetische Aufzeichnungsträger, im wesentlichen bestehend aus einem flexiblen Trägermaterial und einer mindestens einseitig aufgebrachten ferromagnetischen Metalldünnschicht sowie einer auf dieser Metallschicht befindlichen, vorwiegend aus Kohlenstoff bestehenden, 10 bis 100 nm dicken reibungsmindernden Schicht, die geforderte hohe Betriebslebensdauer aufweisen, wenn die reibungsmindernde Schicht offene Mikroporen aufweist, welche ein flüssiges Gleitmittel enthalten.

Gegenstand der Erfindung ist des weiteren ein Verfahren zur Herstellung dieser speziellen magnetischen Aufzeichnungsträger, wobei auf einen im wesentlichen aus einem flexiblen Trägermaterial und einer ferromagnetischen Metalldünnschicht bestehenden scheibenförmigen Aufzeichnungsträger durch DC-Magnetron-Sputtern in einem Druckbereich von $1 \times 10^{-3}$ bis $5 \times 10^{-2}$ mbar Argon eine Kohlenstoffschicht in einer Dicke von 10 bis 100 nm aufgebracht wird und anschließend die in der Kohlenstoffschicht entstandenen offenen Mikroporen mit einem flüssigen Gleitmittel beladen werden.

Die erfindungsgemäßen magnetischen Aufzeichnungsträger zeichnen sich durch eine überraschend hohe Betriebslebensdauer aus, die unter spezifizierten Betriebsbedingungen mehr als 560 Stunden beträgt und damit mehr als 10 Millionen Umläufe ermöglicht. Diese hohe Belastbarkeit der erfindungsgemäßen Aufzeichnungsträger wird durch die in der Kohlenstoffschutzschicht vorhandenen offenen Mikroporen, welche mit an sich bekannten flüssigen Gleitmitteln beladen sind, bewirkt. Die durch TEM-Aufnahmen in der Oberfläche der Kohlenstoffschicht nachweisbaren Poren und auch Risse besitzen eine laterale Abmessung von etwa 1 bis 10 nm. Sie reichen bis in eine Tiefe von bis zu 90% der Schichtdicke, wie sich durch eine schichttiefenaufgelöste Wasserstoff-Analyse eines in die offenen Mikroporen eingedrungenen Gleitmittels, z.B. Butoxyethylstearat, mittels einer Kernreaktion $^{15}N(H,\alpha,\gamma)^{12}C$ nachweisen läßt.

Diese die erfindungsgemäßen Aufzeichnungsträger auszeichnende Ausbildung der reibungsmindernden Kohlenstoffschicht wird in überraschend einfacher Weise dadurch erreicht, daß die Kohlenstoffschicht durch DC-Magnetron-Sputtern in einem hohen Druckbereich von $1 \times 10^{-3}$ bis $5 \times 10^{-2}$ mbar Argon erzeugt wird, und die dabei resultierende Kohlenstoffschicht anschließend mit dem flüssigen Gleitmittel beladen wird. Das Porenvolumen der reibungsmindernden Kohlenstoffschicht nimmt mit ansteigendem Argondruck zu und beträgt zwischen 5 und 40 Prozent des Schichtvolumens. Zur Bestimmung des Anteils an offenen Mikroporen wird eine 100 nm dicke Kohlenstoffschicht auf ein Glassubstrat gesputtert, wobei ein Streifen mit einem Mikroskopierdeckglas abgedeckt wird. Die Messung der Schichtdicke $d_x$ erfolgt an der durch die Abdeckung entstandenen Stufe mit einem Profilometer (Alpha Step 200 der Fa. Tencor). Die relative Massenbelegung $\rho_x$ selbst wird durch winkeldispersive Röntgenfluoreszenz des Kohlenstoffs in der Mikrosonde bestimmt, wobei die Daten auf eine Referenzschicht mit den Werten $d_R$ und $\rho_R$ bezogen wird. Die Referenzschicht wird dabei bei einem Argondruck von $5 \times 10^{-4}$ mbar gesputtert und muß deshalb als porenfrei angesehen werden. Somit ergibt sich der volumenanteil der Mikroporen $V_M$ in Volumenprozent nach

$$V_M = 100 \left[1 - (\rho_x \cdot d_R)/(\rho_R \cdot d_x)\right].$$

Auch der hohe elektrische Widerstand der im Vergleich zu den üblichen Gasdrücken von $5 \times 10^{-4}$ mbar unter hohen Gasdrücken aufgesputterten Schichten ist eine Folge der hohen Porosität. Die Lubrizierung erfolgt in vorteilhafter Weise dadurch, daß der mit der speziellen Kohlenstoffschicht versehene Aufzeichnungsträger entweder durch Tauchen oder Besprühen mit einer Lösung des Gleitmittels oder aber durch den Kontakt mit dem in den üblichen Hüllen für flexible Disks vorhandenen Vlies, das zuvor mit dem Gleitmittel getränkt wurde, imprägniert wird. Die Vlieslubrikation hat den Vorteil, daß das in den Mikroporen der Kohlenstoffschicht enthaltene Gleitmittel nach einem partiellen oder vollständigen Abrieb durch den Magnetkopf immer wieder durch das im Beilagevlies vorhandene Reservoir an Gleitmittel ergänzt wird. Der generelle Aufbau solcher im allgemeinen als Floppy-Disk bezeichneten Informationsspeicher ist bekannt, d.h. daß in einer Schützhülle der magnetischen Aufzeichnungsträger und zwischen beiden ein Beilagevlies enthalten ist. Beim Betrieb dieses Informationsspeichers, der durch entsprechende Öffnungen in der Schutzhülle sowohl für den Antrieb, als auch für die Positionierung des Aufzeichnungsträgers und den Zugriff für den Magnetkopf zur Aufnahme und Wiedergabe der Information ermöglicht wird, bewirkt das Beilagevlies eine Reinigung und für den Fall, daß es mit Gleimittel imprägniert ist, auch eine Schmierung. Diese an sich bekannte Handhabung hat jedoch den Nachteil, daß zeit- und benutzungsabhängig eine unterschiedliche Gleitmittelmenge abgegeben wird. Mit Hilfe des erfindungsgemäßen Aufzeichnungsträgers wird dieser Nachteil beseitigt, da die Mikroporen als Zwischenreservoir fungieren und durch die Zufuhr des Gleitmittels aus diesen Mikroporen an die Oberfläche der Kohlenstoff-Schicht eine gleichmäßige und stetige Schmierung gewahrleistet wird.

Die für die Ausrüstung der erfindungsgemäßen Aufzeichnungsträger geeigneten Gleitmittel sind funktionale Perfluorpolyether-Verbindungen, Fettsäuren und Fettsäureester und fluorierte Silikone oder Gemische aus diesen Verbindungen. Von den funktionalen Perfluorpolyether-Verbindungen werden bevorzugt bifunktionale Derivate mit polaren oder reaktiven Endgruppen eingesetzt, die mit den zu lubrizierenden Mikroporenwänden physikalischchemisch wechselwirken können, wie z.B. Verbindungen mit endständigen Hydroxygruppen (z.B. Fomblin Z-DOL der Fa. Montefluos), Carbonylgruppen (z.B. Fomblin Z-DIAC der Fa. Montefluos), Carboxylgruppen (z.B. Fomblin Z-DEAL der Fa. Montefluos), Isocyanatgruppen (z.B. Fomblin Z-DISOC der Fa. Montefluos) oder mit endständigen C-H-Ringsystemen (z.B. Fomblin AM 2001 der Fa. Montefluos). Aus der Gruppe der Fettsäuren haben sich besonders flüssige Verbindungen bewährt, z.B. Isostearinsäure oder Ölsäure. Bei den Fettsäureestern werden flüssige Verbindungen bevorzugt, die verzweigte Fettsäuren und/oder verzweigte Fettalkohole enthalten, z.B. Isotridecylstearat oder Etheralkohole, z.B. Butoxyethylstearat.

Das Trägermaterial für die scheibenförmigen magnetischen Aufzeichnungsträger besteht aus flexiblen Folien aus Polyestern, wie z.B. Polyesterterephthalat (PET), aus Polyimid (PI), Polyethersulfon (PES) oder Polyetheretherketon (PEEK).

Auf diese Trägermaterialien werden gegebenenfalls anorganische oder metallische Zwischenschichten, wie z.B. Chrom oder Titan oder organische Zwischenschichten, die gegebenenfalls mit anorganischen feinen Teilchen, z.B. $SiO_2$, gefüllt sind aufgebracht, auf welche anschließend dann die ferromagnetische Metalldünnschicht in einer Stärke von 10 bis 1000 nm mittels DC-Magnetron-Sputtern abgeschieden wird. Als geeignete magnetische Materialien kommen Eisen, Nickel, Kobalt oder deren Legierungen sowie Legierungen des Kobalts und Chroms in Frage.

Das Aufbringen der reibungsmindernden Kohlenstoffschicht erfolgt gemäß dem erfindungsgemäßen Verfahren zweckmäßigerweise unmittelbar im Anschluß an das Abscheiden der ferromagnetischen Metallschicht im gleichen Gerät. Als Target wird dabei graphitischer Kohlenstoff eingesetzt. Die Targetleistungsdichte beträgt 3 bis 12 Watt cm$^2$ und der Argonsputterdruck $1 \times 10^{-3}$ bis $5 \times 10^{-2}$ mbar.

Diese erfindungsgemäßen magnetischen Aufzeichnungsträger werden nun in ein beliebiges Format (z.B. 3'$_2$" oder 5$^1$/$_4$") gestanzt und mit den entsprechenden Hüllen bzw. Cartridges konfektioniert, wobei Vliese verwendet werden, die zuvor mit einem Gleitmittel behandelt werden. Die optimale Gleitmittelmenge in dem Vlies muß sowohl auf den Vliestyp als auch auf die Morphologie der Kohlenstoffschicht abgestimmt werden. Sie beträgt für das erfindungsgemäße System 1 bis 5 g pro m$^2$

Vliesoberfläche, bevorzugt 2,1 bis 3,3 g/m$^2$ (ohne Lösungsmittel).

Beispiel

Auf eine Polyimidfolie mit einer Dicke von 50 $\mu$m und mit einer Rauhigkeit von $R_a$ = 2 nm wurde eine 200 nm dicke $Co_{80}Cr_{20}$-Schicht durch DC-Magnetron-Sputtern abgeschieden, wobei der Argondruck $8 \times 10^{-4}$ mbar betrug. Auf diese Schicht wurde, ebenfalls durch DC-Magnetron-Sputtern, eine 40 nm dicke Kohlenstoffschicht abgeschieden, wobei der Argondruck $8 \times 10^{-3}$ betrug.

Der Mikroporenanteil wurde zu 10 Vol.% bestimmt. Aus TEM-Aufnahmen einer entsprechend hergestellten freitragenden Schicht (d = 40 nm) ergibt sich ein mittlerer Durchmesser der Mikroporen von weniger als 3 nm.

Als Gleitmittel wurde eine 5%ige Lösung von Butoxyethylstearat in n-Hexan verwendet. Diese wurde 3 Sekunden lang auf ein 170 $\mu$m dickes Polyestervlies (Kendall 192 der Fa. Kendall, Belgien) gesprüht, so daß sich eine Gleitmittelmenge (ohne Lösungsmittel) von 2,1 g.m$^2$ Vliesoberfläche ergab. Aus dem durch Sputtern mit $Co_{80}Cr_{20}$ und Kohlenstoff beschichteten Folienmaterial wurden 5$^1$/$_4$"-Scheiben ausgestanzt und diese mit einer handelsüblichen Hülle und dem oben aufgeführten, mit Gleitmittel ausgerüsteten Vliesmaterial konfektioniert. Im Laufwerk mit 300 Upm ergab sich mit einem sphärischen Schreib/Lesekopf und einem Kopfandruck von 0,18 N eine Betriebslebensdauer von mehr als 10 Millionen Umläufen auf einer Spur. Dabei wurde die Betriebslebensdauer durch die Abnahme des RMS-Pegels des 2 F-Signals um 15% des Ausgangswertes spezifiziert.

Vergleichsversuch

Aus dem durch Sputtern mit $Co_{80}Cr_{20}$ und Kohlenstoff beschichteten Folienmaterial aus Beispiel 1 wurden 5'$_4$"-Scheiben ausgestanzt und diese mit einer handelsüblichen Hülle und dem in Beispiel 1 aufgeführten unlubrizierten Vliesmaterial konfektioniert. Unter den Prüfbedingungen aus Beispiel 1 ergab sich eine Betriebslebensdauer von nur 0,2 Millionen Umläufen auf einer Spur.

**Ansprüche**

1. Scheibenförmiger magnetischer Aufzeichnungsträger im wesentlichen bestehend aus einem flexiblen Trägermaterial und einer mindestens einseitig aufgebrachten ferromagnetischen Metalldünnschicht sowie einer auf dieser Metallschicht befindlichen, vorwiegend aus Kohlenstoff bestehenden, 10 bis 100 nm dicken reibungsmindernden Schicht, dadurch gekennzeichnet, daß die reibungsmindernde Schicht offene Mikroporen aufweist, welche ein flüssiges Gleitmittel enthalten.

2. Scheibenförmiger magnetischer Aufzeichnungsträger gemäß Anspruch 1, dadurch gekennzeichnet, daß der Mikroporenvolumenanteil der reibungsmindernden Schicht, welcher durch einen Vergleich der Schichtdicken mit der über eine Röntgenfluoreszenzmessung bestimmten Massenbelegung ermittelt wird, 5 bis 60% beträgt.

3. Verfahren zur Herstellung scheibenförmiger magnetischer Aufzeichnungsträger, im wesentlichen bestehend aus flexiblem Trägermaterial und einer mindestens einseitig aufgebrachten ferromagnetischen Metalldünnschicht sowie einer auf dieser Metalldünnschicht befindlichen, vorwiegend aus Kohlenstoff bestehenden reibungsmindernden Schicht, dadurch gekennzeichnet, daß auf einen im wesentlichen aus einem flexiblen Trägermaterial und einer ferromagnetischen Metalldünnschicht bestehenden Aufzeichnungsträger durch DC-Magnetron-Sputtern in einem Druckbereich von $1 \times 1^{-3}$ bis $5 \times 10^{-2}$ mbar Argon eine Kohlenstoffschicht mit einer Dicke von 10 bis 100 nm aufgebracht wird und anschließend die in der Kohlenstoffschicht entstandenen offenen Mikroporen mit einem flüssigen Gleitmittel beladen werden.

4. Magnetischer Informationsspeicher, bestehend aus einem magnetischen Aufzeichnungsträger gemäß Anspruch 1 in einer allseitig geschlossenen Schutzhülle aus elastischem Material, welche Öffnungen für den Antrieb und die Positionierung des Aufzeichnungsträgers sowie für die Aufnahme und Wiedergabe von Informationen aufweist und auf deren dem Aufzeichnungsträger zugewandten Innenseite ein mit Gleitmittel getränktes Beilagevlies angebracht ist, dadurch gekennzeichnet, daß bei der Benutzung des magnetischen Informationsspeichers der Vorrat an flüssigem Gleitmittel in den offenen Mikroporen der reibungsmindernden Kohlenstoffschicht aus dem Gleitmittelreservoir des Beilagevlieses ergänzt wird.